# EUROPÄISCHE PATENTSCHRIFT

(11) **EP 1 206 417 B1**
(45) Veröffentlichungstag und Bekanntmachung des Hinweises auf die Patenterteilung: **29.01.2003**
(21) Anmeldenummer: 00951518.0
(22) Anmeldetag: 16.08.2000
(51) Int. Cl.: C03B 5/02, C03B 5/225, C03B 5/44, C03B 5/23

(54) **SKULLTIEGEL FÜR DAS ERSCHMELZEN ODER DAS LÄUTERN VON ANORGANISCHEN SUBSTANZEN**
SKULL POT FOR MELTING OR REFINING INORGANIC SUBSTANCES
CREUSET A FOND REFROIDI SERVANT A LA FUSION OU A L'AFFINAGE DE SUBSTANCES MINERALES

(30) Priorität: 21.08.1999 DE 19939772
(43) Veröffentlichungstag der Anmeldung: 22.05.2002
(73) Patentinhaber: Schott Glas, 55122 Mainz (DE); CARL-ZEISS-STIFTUNG trading as SCHOTT GLAS, 55122 Mainz (DE)
(72) Erfinder: RÖMER, Hildegard, D-61184 Karben (DE); SCHMIDBAUER, Wolfgang, D-55126 Mainz (DE); KIEFER, Werner, D-55126 Mainz (DE); RÄKE, Guido, D-55411 Bingen (DE); LENTES, Frank-Thomas, D-55411 Bingen (DE)
(74) Vertreter: Dr. Weitzel & Partner
(86) Internationale Anmeldenummer: EP0007988
(87) Internationale Veröffentlichungsnummer: WO01014265

(56) Entgegenhaltungen:
- EP-A- 0 079 266
- FR-A- 2 456 926
- FR-A- 2 768 257
- SOVIET PATENTS ABSTRACTS Section Ch, Week 17, 28. April 1988 (1988-04-28) Derwent Publications Ltd., London, GB; Class L01, AN 88-117451 XP002149730 -& SU 1 337 351 A (HIGH FREQ CURRENT), 15. September 1987 (1987-09-15)
- PETROV, YU.B. ET AL.: "continuous casting glass melting in a cold crucible induction furnace" XV INTERNATIONAL CONGRESS ON GLASS 1989, Bd. 3a, 1989, Seiten 72-77, XP000075308 Leningrad, su
- DATABASE WPI Section Ch, Week 33 Derwent Publications Ltd., London, GB; Class K07, AN 2000-385316 XP002149690 -& RU 2 132 097 C (MOSC RADON RADIOACTIVE WASTE DECONTAM), 20. Juni 1999 (1999-06-20)
- DATABASE WPI Section Ch, Week 16 Derwent Publications Ltd., London, GB; Class L01, AN 1997-177595 XP002149731 -& RU 2 065 413 C (LAVA RES TECH ENTERP), 20. August 1996 (1996-08-20)
- NEZHENTSEV, V.V. ET AL.: "use of induction furnaces with a cold crucible for melting hard glasses" GLASS AND CERAMICS, Bd. 43, Nr. 9/10, September 1986 (1986-09) - Oktober 1986 (1986-10), Seiten 391-396, XP002149729 CONSULTANTS BUREAU, NEW YORK, US ISSN: 0361-7610

## Beschreibung

Die Erfindung betrifft einen sogenannten Skulltiegel für das Erschmelzen oder das Läutern von Gläsern oder Glaskeramiken.

Wannen aus feuerfestem Material werden von hochschmelzenden Gläsern oberhalb 1650° C stark angegriffen, so daß die Standzeiten unwirtschaftlich werden und die produzierten Gläser voller Steine, Knoten und Schlieren aus dem Wannenmaterial sind.

Bei Temperaturen oberhalb 1650° C ist darüber hinaus der Einsatz einer elektrischen Zusatzbeheizung stark eingeschränkt, da die Korrosion der Elektroden, zum Beispiel Mo-Elektroden, stark zunimmt und die Gläser durch die Verunreinigungen stark gefärbt werden.

Aggressive Gläser, wie sie für einige optische Anwendungen benötigt werden, greifen beim Schmelzen, besonders beim Einschmelzen, auch bei tieferen Temperaturen die keramischen Feuerfestmaterialien stark an. Der starke Wannenangriff ermöglicht weder ein wirtschaftliches Schmelzen bezüglich Standzeit der Wannen noch eine exakte Einhaltung der Zusammensetzung und damit verbunden der geforderten Eigenschaften. Daher werden viele dieser Gläser in Platinwannen geschmolzen. Einige der aggressiven Gläser können aber auch nicht in Platintiegeln geschmolzen werden, da sie das Platin angreifen und das gelöste Platinoxid das Glas färbt, bzw. das Platinoxid im weiteren Prozeß zum Platinmetall reduziert wird und als Platinteilchen Störungen verursacht.

Bei hochreinen Gläsern, wie sie beispielsweise in der Faseroptik Einsatz finden, können bereits wenige ppb an färbenden Oxiden, die durch den Schmelzprozeß eingetragen werden, störend sein.

Das Erhitzen von Glas mittels Hochfrequenz bietet die Möglichkeit, die Energie direkt in das Glas einzukoppeln. Hierdurch können Verunreinigungen durch Elektrodenkorrosion vermieden werden. Im US-Patent 4,780,121 wird ein hochfrequenz beheizter keramischer Läutertiegel beschrieben, in dem Kalk-Natron-Silicat-Gläser bei Temperaturen zwischen 1150° C und 1450° C geläutert werden. Der Nachteil bei diesem Verfahren besteht darin, daß weiterhin das feuerfeste Material bei Temperaturen über 1700° C von den Gläsern sehr stark angegriffen wird.

Durch den direkten Energieeintrag in das Glas können Gläser auch auf Temperaturen oberhalb 1650° C erhitzt werden. Beim Einsatz von keramischen Tiegel- bzw. Wannenmaterialien soll die Temperatur auf der Tiegelinnenwand 1650° C nicht überschreiten. Zur Aufrechterhaltung dieser Temperatur muß der Temperaturgradient in der Tiegelwand mit steigender Temperatur immer steiler werden, d.h. die Tiegelwand muß immer dünner und die Kühlung der Außenwand immer intensiver werden. Die Kühlung der Außenwand durch natürliche Konvektion, wie im US-Patent 4,780,121 beschrieben, ist eng begrenzt, da es durch die erhitzte Luft zu Überschlägen zwischen Tiegelwand und Spule kommt. Höhere Schmelztemperaturen können erreicht werden, wenn der keramische Tiegel durch wassergekühlte Kupferrohre gekühlt wird.

In einer Reihe von Patentschriften US-A-3,461,215, DE-C-2 033 074, EP-B1-0 119 877 , DE-C1-3 316 546 werden Skulltiegel beschrieben, bei denen auf den keramischen Innentiegel vollständig verzichtet wird. Es werden Schmelztemperaturen bis 3000° C erreicht. In der Literatur sind auch kontinuierlich arbeitende Skulltiegel zum Einschmelzen von radioaktiven Materialien beschrieben. Durch den Einsatz der Skulltiegel kann dabei vermieden werden, daß radioaktiv verseuchtes Wannenmaterial anfällt. An das eingeschmolzene Glas werden dabei keine Anforderungen bezüglich Blasenqualität gestellt.

DE-C2-33 16 547 beschreibt einen kalten Tiegel für das Erschmelzen nicht-metallischer an-organischer Verbindungen. Dabei ist auf den oberen Tiegelrand ein Aufbau aufgesetzt, der beispielsweise aus Oxidkeramik besteht. Dieser Aufbau ist von zylindrischer Gestalt. Er dient der Verringerung von Wärmeverlusten.

Nachteil all der in der Literatur und den Patenten beschriebenen Skulltiegelsysteme ist, daß die wassergekühlten Bauteile in den Gasraum oberhalb der Schmelzoberfläche reichen. Damit sind einige wesentliche Probleme verbunden:
1. Die Schmelzoberfläche wird durch die Wärmeabstrahlung und die wassergekühlte Skulltiegelwandung gekühlt. Daraus ergibt sich ein signifikanter Temperaturgradient von der Mitte zur Oberfläche der Schmelze. Für den Einsatz als Läuteraggregat ist dies nachteilig, da die Blasen nicht oder nur unzureichend durch die kalten Oberflächenschicht aufsteigen können oder es zu einer starken Schaumbildung kommt.
2. Bei Verwendung einer Brennerzusatzheizung kondensieren schwefelhaltige Brennerabgase an den gekühlten Skullfingem und führen aufgrund der Bildung von Schwefelsäure zur Korrosion des Kupfers. Dies reduziert die Lebensdauer des Skulltiegels drastisch.
3. Bei aggressiven Gläsern kann es zu Korrosion der wassergekühlten Kupferbauteile im Oberofenraum kommen. Durch direktes Abblättern der korrodierten Kühlfingeroberfläche oder durch Transport über die Gasphase gelangen die metallischen Verunreinigungen in die Glasschmelze und führen zu Verfärbungen der Schmelze.

Die Aufgabe der Erfindung ist die Bereitstellung eines hochfrequenz beheizten Skulltiegels ohne keramischen Innentiegel zum Erhitzen von Glasschmelzen auf Temperaturen bis zu 3000° C vorzugsweise bis 2600° C sowie der Glasoberfläche auf Temperaturen bis zu 2600° C, vorzugsweise bis zu 2400° C, und bei dem die metallischen Kühlfinger gegen Korrosion durch kondensierte Verbrennungsgase oder Verdampfungsprodukte geschützt sind.

Diese Aufgabe wird durch die Merkmale von Anspruch 1 gelöst.

Durch die Erfindung wird im einzelnen folgendes erreicht: die Kühlfinger sind auf der der Glasschmelze zugekehrten Seite vollständig mit Glasschmelze bedeckt. Sie sind somit einerseits gegen Abgase oder Verdampfungsprodukte aus der heißen Glasoberfläche geschützt.

Dies wird dadurch erreicht, daß die metallischen Kühlfinger im oberen Tiegelbereich, aber unterhalb der Glasoberfläche von der Vertikalen in die Horizontale übergehen. Dieser Übergang kann allmählich erfolgen oder die Kühlrohre sind um 90° abgebogen. Durch das Abbiegen der Kühlrohre in die Horizontale entsteht ein gekühlter Kragen kurz unterhalb der Schmelzoberfläche. Die Temperatur der Glasschmelze nimmt im Bereich des Kragens nach außen hin ab. Die Glasschmelze kann im Randbereich des Kragens soweit abgekühlt werden, daß auf den Rand des Kragens ein Ring aus keramischem Feuerfestmaterial aufgesetzt werden kann. Die Temperatur im Randbereich kann über den Kragendurchmesser und die Glashöhe im Randbereich eingestellt werden, so daß auch bei sehr hohen Schmelztemperaturen im Kernbereich das Glas im Außenbereich heruntergekühlt und durch den Feuerfestrand gehalten werden kann.

Korrosionsprobleme an den metallischen Kühlfingern werden damit vermieden. Die Lebensdauer der Metallrohre und damit des Tiegels als solchem wird um ein vielfaches gesteigert.

Weiterhin ist die Glasoberfläche durch die Schmelze selbst gegen die Kühlfinger abgeschirmt. Die Schmelze verhindert, daß der Oberofenraum in unerwünschter Weise durch die Kühlfinger gekühlt wird. Damit lassen sich im Oberofenraum in kontrollierter Weise höhere Temperaturen erzielen, so daß sich auch in der Oberflächenschicht der Schmelze höhere Temperaturen einstellen. Dies ist gerade beim Läutern besonders vorteilhaft. Dabei kann entweder auf den Zusatz von Läutermitteln verzichtet werden, oder der Läutervorgang kann in kürzerer Zeit durchgeführt werden.

Die erfindungsgemäße pilzartige Tiegelform ist nicht nur beim Läutern vorteilhaft, sondern bereits beim Einschmelzprozeß. Weil nämlich die Oberfläche höhere Temperaturen annimmt, als bei konventionellen Tiegeln, kommt es zu einem rascheren Abschmelzen von Gemenge. Der Durchsatz wird somit gegenüber bekannten Tiegeln gesteigert. Ein weiterer Vorteil der Erfindung besteht darin, daß keine Korrosionsprodukte der Kühlfinger in die Glasschmelze gelangen.

Durch die Erfindung lassen sich alle Anforderungen an technische als auch an optische Gläser erfüllen, insbesondere die Forderung nach einer guten Transparenz, wobei die Gläser frei von Blasen sein müssen.

Beim Läutern mit einem Pilztiegel gemäß der Erfindung wird das Glas von physikalisch und chemisch gebundenen Gasen befreit. Der Läutervorgang wird beim konventionellen Glasschmelzen durch Läutermittel wie Na₂SO₄, As₂O₃, Sb₂O₃ oder NaCI unterstützt. Diese Läutermittel zersetzen sich oder verdampfen bei Läutertemperatur und bilden Blasen, in die Restgase aus der Schmelze eindiffundieren können. Die Läuterblasen müssen ausreichend groß sein, um in wirtschaftlich vertretbaren Zeiten in der Glasschmelze zur Oberfläche aufzusteigen und aufzuplatzen. Die Aufstiegsgeschwindigkeit der Blasen ist sowohl von der Blasengröße als auch von der Viskosität des Glases abhängig. Bei einer Temperaturerhöhung von 1600° C auf 2400° C erhöht sich beispielsweise die Aufstiegsgeschwindigkeit etwa um den Faktor 100, d.h. eine Blase mit 0,1 mm Durchmesser steigt bei 2400° C ebenso schnell auf wie eine Blase von 1 mm bei 1600° C.

Durch die Erhöhung der Läutertemperatur wird bei den meisten Gasen die physikalische und chemische Löslichkeit erniedrigt und somit die Hochtemperatur-Läuterung zusätzlich unterstützt.

Die Hochtemperatur-Läuterung bietet die Möglichkeit, entweder die Läuterzeit drastisch zu senken oder auf den Zusatz von Läutermitteln zur Erzeugung großer Läuterblasen zu verzichten. Voraussetzung ist aber, daß das aufsteigende Gas an die Glasoberfläche gelangen kann und die an der Oberfläche befindlichen Blasen aufplatzen und sich kein Schaum bildet.

Ein ganz entscheidender Vorteil ist somit die außerordentlich hohe Temperatur, die sich mit der Erfindung erreichen läßt.

Die Beheizung des erfindungsgemäßen Pilztiegels erfolgt im wesentlichen durch Einstrahlung von Hochfrequenzenergie im Tiegelbereich unterhalb des Kragens. Die Schmelzoberfläche ist aufgrund der thermischen Isolation im Oberofenraum deutlich heißer als bei den einfachen bekannten zylindrischen Skulltiegeln.

Bei dem erfindungsgemäßen Pilztiegel kann die Schmelzoberfläche durch Gasbrenner oder Strahlenbeheizung zusätzlich erhitzt werden. Die Brennerabgase können bei diesem Aufbau nicht an kalten Bauteilen kondensieren, sondern werden über eine Abgasöffnung aus dem Tiegelbereich geführt. Das gleiche gilt für die Verdampfungsprodukte aus der heißen Glasoberfläche. Damit gibt es keine Korrosionsprobleme an den metallischen Kühlfinger mehr und die Pilztiegel sind nahezu beliebig lange haltbar.

Die Erhöhung der Temperatur in der Schmelzoberfläche durch bessere Isolation des Oberofenraums oder durch die Zusatzbeheizung mit Gasbrennern oder Strahlenheizung bewirkt auch eine bessere Einkopplung der Hochfrequenz in diesem Bereich, da die heißeren Glasoberflächenschichten eine höhere Leitfähigkeit besitzen als kalte. Somit tritt ein sich selbst verstärkender Effekt auf.

Für die Läuterung konnten ebenfalls aufgrund der heißen Schmelzoberfläche verbesserte Ergebnisse erzielt werden, da eine heiße Glasoberfläche Voraussetzung für einen effektiven Blasenaustritt aus der Schmelze ist. Obwohl die Glasoberfläche zu den Rändern hin ein Temperaturgefälle aufweist, treffen die Blasen, die im vertikalen Teil des Tiegels entstehen und senkrecht aufsteigen, auf eine heiße Glasoberfläche. Damit ist ein rascher Blasenaufstieg und ein schnelles Aufplatzen der Blasen sichergestellt.

Die Erfindung ist anhand der Zeichnung näher erläutert. Darin ist im einzelnen folgendes dargestellt:
- Figur 1: zeigt in einer schematischen Darstellung im Aufriß das Grundprinzip eines pilzförmigen Tiegels (Pilztiegel).
- Figur 2: zeigt eine Draufsicht auf die Metallrohre, aus denen der Kragen gebildet ist.
- Figur 3: zeigt eine Draufsicht auf einen Kragen, der aus Platten gebildet ist.
- Figur 4: zeigt in einer schematischen Darstellung eine Anlage zum Erschmelzen und Läutern von Glas, in der der Pilztiegel zum Erschmelzen von Glas dient.
- Figur 5: zeigt in einer schematischen Darstellung eine andere Anlage zum Erschmelzen und Läutern von Glas, in der der Pilztiegel zum Läutern des Glases dient.
- Figur 6: zeigt in einer schematischen Darstellung im Aufriß das Grundprinzip eines pilzförmigen Tiegels mit Ausfluß im oberen Bereich.
- Figur 7: zeigt in einer schematischen Darstellung eine weitere Ausführungsform einer Anlage zum Erschmelzen und Läutern von Glas, in der sowohl das Einschmelzen als auch das Läutern in je einem Pilztiegel erfolgen.
- Figur 8: zeigt in einer schematischen Darstellung eine weitere Anlage zum Erschmelzen und Läutern von Glas, in der jeweils das Einschmelzen als auch das Läutern in jeweils einem Pilztiegel erfolgen.

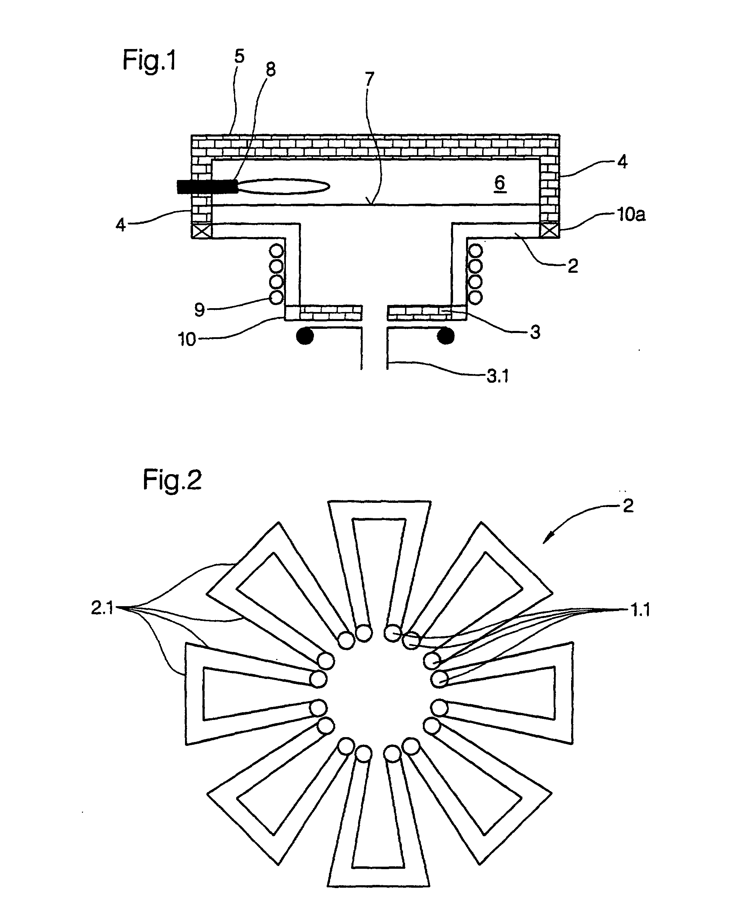

Der in Figur 1 dargestellte Tiegel ist, wie man sieht, im wesentlichen pilzförmig. Er umfaßt eine zylindrische Wandung 1. Diese ist aus einem Kranz von vertikalen Metallrohren gebildet. Die vertikalen Metallrohre sind an ihren oberen Enden um 90 Grad abgekröpft und bilden in ihrer Gesamtheit einen Kragen 2.

Der Boden 3 des Tiegels ist aus Feuerfestmaterial, das gemauert werden kann. Der Boden kann bei Bedarf auch aus gekühlten metallischen Rohren oder Ringen aufgebaut werden. Dies ist insbesondere bei sehr hohen Schmelztemperaturen vorteilhaft. Man erkennt einen Auslaß 3.1 zum Ablassen der fertigen Glasschmelze.

Auf den äußeren Rand des Kragens 2 ist eine Oberwand 4 aufgesetzt. Diese ist als zylindrischer Ring eines keramischen feuerfesten Materiales ausgeführt. Eine Abdeckung 5 besteht ebenfalls aus Feuerfestmaterial. Der Oberofenraum 6 ist umschlossen von der Oberwand 4, der Abdeckung 5 sowie dem Spiegel 7 der Schmelze.

In den Oberofenraum 6 ragt die Düse 8 eines Brenners hinein.

Es ist eine Induktionsspule 9 vorgesehen. Mit dieser wird Hochfrequenzenergie in die Glasschmelze des Tiegels eingekoppelt.

Im unteren Bereich der Tiegelwandung 1 befindet sich ein elektrischer Kurzschlußring 10. Dieser umschließt den Boden 3. Dabei handelt es sich um einen wassergekühlten Ring, mit dem der Boden 3 des Pilztiegels kurzgeschlossen ist. Der Kurzschluß ist notwendig, um eine Lichtbogenbildung bei hohen Schmelztemperaturen zu verhindern. Bei sehr großen Tiegeln befindet sich am Krangenrand oben ein zusätzlicher elektrischer Kurzschlußring 10a.

In Figur 2 sind zwar die den Kragen 2 bildenden horizontalen Rohrabschnitte 2.1 gegenüber den vertikalen Rohren 1.1 rechtwinklig abgekröpft. Dies muß jedoch nicht so sein. Vielmehr könnten die Rohrabschnitte 2.1 auch unter einem anderen Winkel verlaufen, beispielsweise derart, daß sie von innen nach außen etwas ansteigen.

Figur 2 läßt erkennen, daß die Rohre 1.1 der Tiegelwand 1 kranzförmig angeordnet sind, und wenigstens annähernd einen Zylinder bilden.

Figur 2 läßt ferner die Konfiguration der Rohre 2.1 des Kragens 2 erkennen.

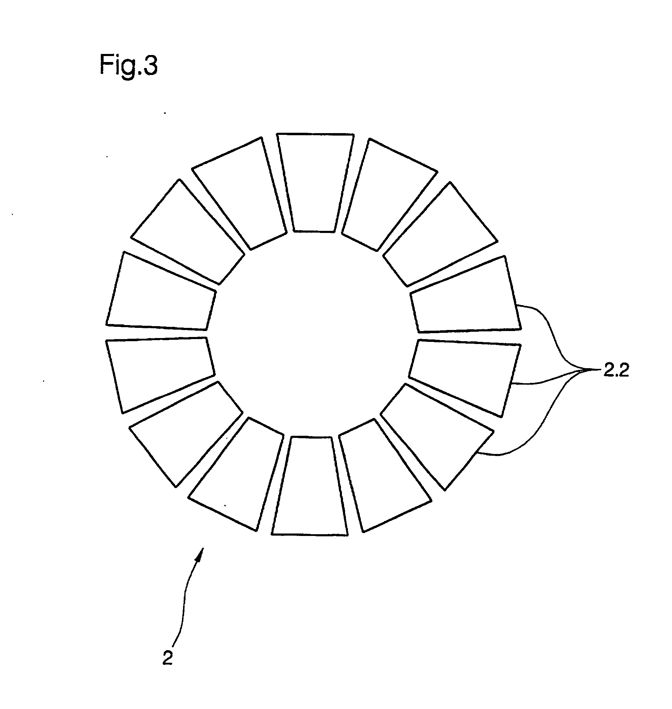

Figur 3 zeigt in Draufsicht eine andere Gestaltung eines Kragens 2. Der Kragen besteht in diesem Falle aus einer Mehrzahl von hohlen Platten 2.2. Diese sind an die Metallrohre 1.1 der Tiegelwand 1 angeschlossen. Sie können abwechselnd radial von außen nach innen und von innen nach außen mit Kühlmittel durchströmt werden.

Statt der hohlen, durchströmten Platten 2.2 kann aber auch folgende Konstruktion vorgesehen werden: es werden Platten vorgesehen, so wie in Figur 3 gezeigt, jedoch sind die Platten nicht unmittelbar von Kühlflüssigkeit durchströmt, sondern sie umschließen wiederum Metallrohre, die durchströmt sind.

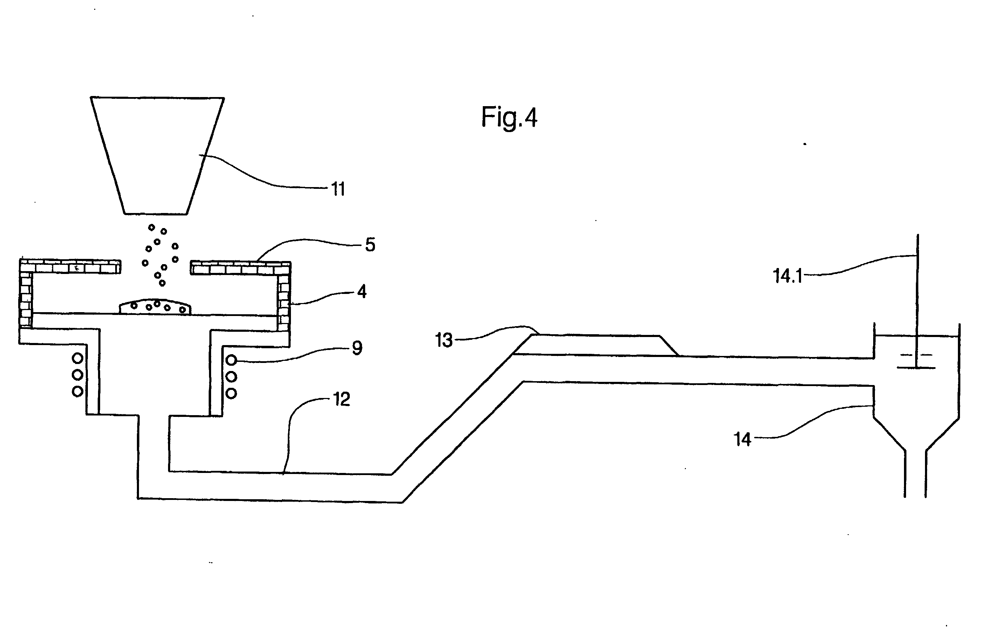

Die Anlage gemäß Figur 4 zeigt einen Fülltrichter 11, mit welchem einem Schmelztiegel Gemenge oder Scherben von oben zugeführt wird. Der Schmelztiegel weist wiederum die wesentlichen Bestandteile des Pilztiegels gemäß Figur 1 auf, somit eine Tiegelwandung 1, einen Kragen 2, einen Boden 3, eine Oberwand 4, eine Abdeckung 5 sowie eine Induktionsspule 9.

Die Schmelze gelangt nach dem Erschmelzen im Pilztiegel durch eine Rinne 12 in eine Läuterkammer 13, und schließlich über ein Konditionierbecken 14 mit Rührer 14.1 zu einer hier nicht dargestellten Formgebungsstation.

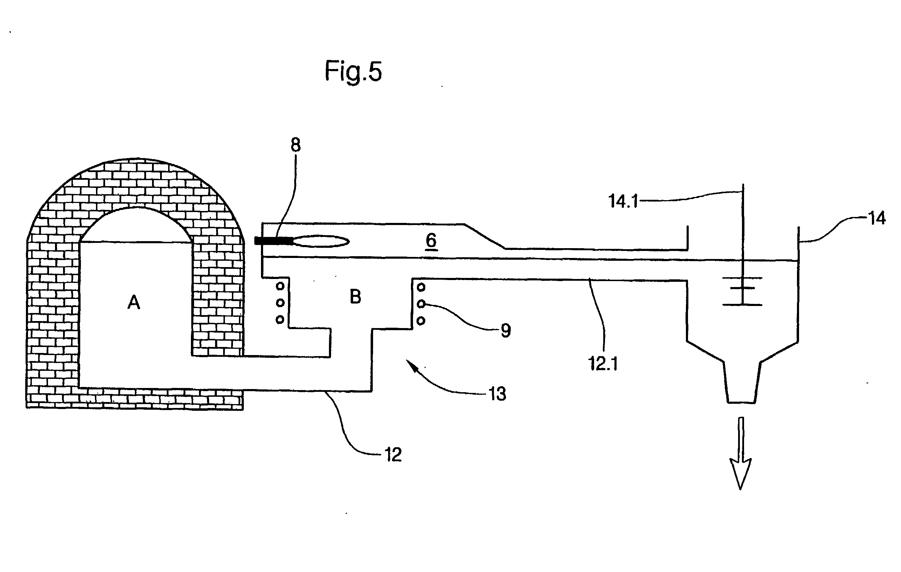

Bei der Ausführungsform gemäß Figur 5 wird das Glas auf konventionelle Weise in einer Schmelzwanne erschmolzen, die aus Feuerfestmaterial gemauert ist. Dabei werden Temperaturen von bis zu 1700 Grad Celsius erreicht.

Über einen Verbindungskanal 12 gelangt die Schmelze von unten in einen Pilztiegel 13, in dem das Läutern stattfindet. Der Pilztiegel ist wiederum von einer Induktionsspule 9 umgeben. Es ist ferner dem Gewölbe über dem Schmelzenspiegel wiederum ein Brenner zugeordnet. im Pilztiegel bei Schmelztemperaturen von bis zu 1900 Grad Celsius (Kerntemperatur der Schmelze) wird das Gewölbe zusätzlich mit dem Brenner beziehungsweise mit einer Mehrzahl von Brennern beheizt, um die für die Läuterung ausreichende Oberflächentemperatur von über 1700 Grad Celsius sicherzustellen. Bei sehr hohen Schmelztemperaturen von über 2000 Grad Celsius muß das Gewölbe aktiv gekühlt werden, um eine Überhitzung zu vermeiden. Die Kühlung erfolgt durch Einblasen von Luft oder anderen Gasen in den Oberofenraum 6, oder durch Kühlung des Gewölbes mit einem flüssigen Medium, wobei das Gewölbe ähnlich wie der Tiegel aus kühlbaren metallischen Bauteilen aufgebaut ist, die allerdings mit Feuerfest-Materialien verkleidet sind, um Korrosion durch Abgase zu vermeiden..

Die Glasschmelze verläßt den Läutertiegel 13, indem sie im Bereich des Kragens nach der Seite austritt. Sie gelangt in eine Abkühlrinne 12.1, wo sie auf Temperaturen von unter 1700 Grad Celsius gekühlt wird. An die Abkühlrinne 12.1 ist wiederum ein Konditionierbehälter 14 mit Rührer 14.1 angeschlossen.

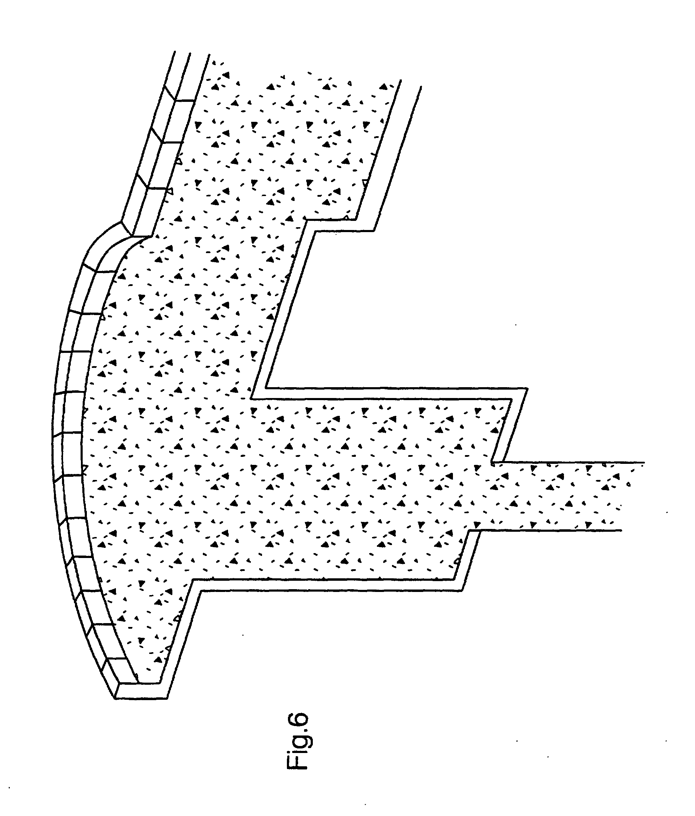

Figur 6 zeigt einen Querschnitt durch einen Pilztiegel mit Ausfluß oben seitlich.

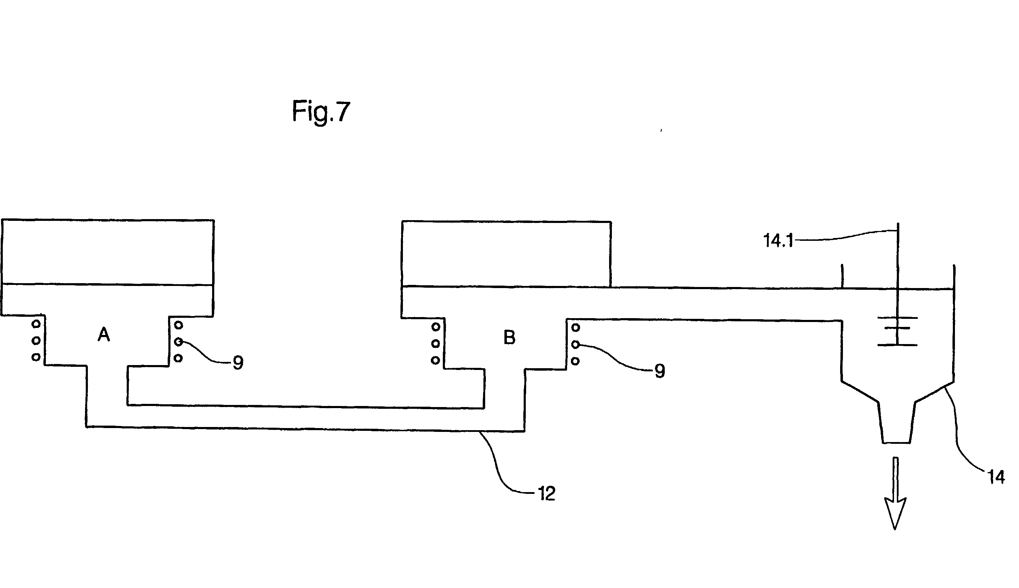

Bei der Ausführungsform gemäß Figur 7 erkennt man eine Kombination aus zwei erfindungsgemäßen Pilz-Skulltiegeln. Beide arbeiten mit Hochfrequenzenergie - siehe die Spulen 9. Dabei dient Skulltiegel A als Einschmelzaggregat, und Skulltiegel B zur Läuterung.

Dem Tiegel A wird Gemenge beziehungsweise Glasschmelze von oben her zugeführt. Das erschmolzene Glas wird am Tiegelboden abgeführt. Die Glasschmelze wird dem Skulltiegel B von unten her über die Rinne 12 zugeführt. Die Rinne ist somit einerseits an den Boden von Skulltiegel A angeschlossen, und andererseits an den Boden von Skulltiegel B. Dies hat den folgenden Vorteil. Auf diese Weise wird nämlich zum einen erreicht, daß die Oberflächenschicht der Glasschmelze in Tiegel B relativ heiß ist und damit Glasblasen nach oben steigen läßt.

Als konkretes Auslegungsbeispiel sei hier die Dimensionierung eines Tiegelmodels mit ca. 8 I heißem Schmelzvolumen angeführt. Der Tiegel hat im unteren Bereich einen Durchmesser von 20 cm. Er ist am Boden durch einen wassergekühlten Ring kurzgeschlossen. Die Schmelzhöhe beträgt 25 cm. Die Kühlfinger sind in 20 cm Höhe um 90 Grad nach außen abgewinkelt. Der Kragen hat einen Außendurchmesser von 50 cm. Auf dem Kragenrand sitzt ein Ring aus keramischem Siliciumdioxid oder Zirkondioxid oder Zirkonsilikat. Die Glasdichtung erfolgt über den Kontakt des Keramikringes mit der wassergekühlten Kragenplatte. Die Abdeckplatte besteht ebenfalls aus Siliciumdioxid oder Sirkondioxid oder Zirkonsilikat. Die Beheizung des Oberofenraumes erfolgt mittels eines Sauerstoffbrenners.

Der genannte Tiegel konnte sowohl als kontinuierlich arbeitender Läutertiegel als auch als diskontinuierlicher Einschmelztiegel über mehrere Monate eingesetzt werden, ohne daß Korrosionsprobleme auftraten.

Selbstverständlich lassen sich größere Volumina durch entsprechendes Upscaling erreichen, wobei bei einem Tiegel mit 200 I Schmelzvolumen ein zweiter elektrischer Kurzschluß am äußeren Kragenrand sich als notwendig erwiesen hat.

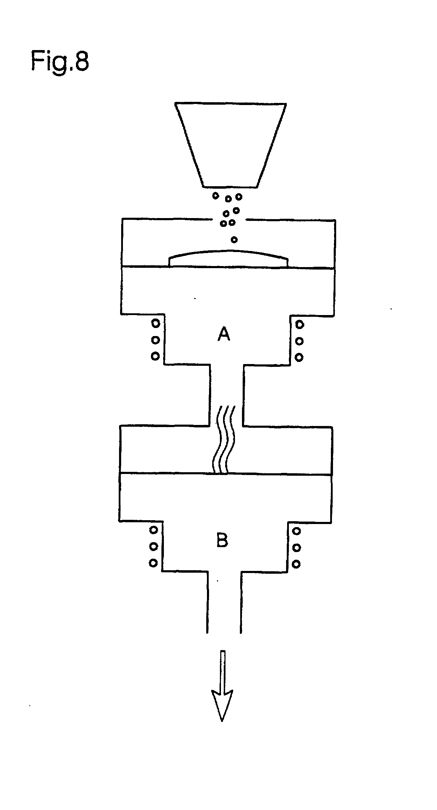

Bei der Ausführungsform gemäß Figur 8 ist wiederum ein Läutertiegel B einem Schmelztiegel A nachgeschaltet. Dabei gelangt die Schmelze durch freien Fall von Tiegel A zu Tiegel B. In beiden Fällen handelt es sich wiederum um erfindungsgemäße Pilztiegel. Vorteilhaft bei dieser Anordnung ist, daß die Verbindungsstrecken zwischen den HF-Bauteilen relativ kurz sind. Dies spielt dann eine wichtige Rolle, wenn aggressive Gläser mit hohen Anforderungen an die Transmission erzeugt werden sollen. Als Verbindungselemente werden in diesem Falle widerstandsbeheizte Platinbauteile eingesetzt.

Als konkretes Auslegungsbeispiel sei hier die Dimensionierung eines Tiegelmmodells mit ca. 8 Liter heißem Schmelzvolumen aufgeführt. Der Tiegel hat im unteren Bereich einen Durchmesser von 20 cm und ist am Boden durch einen wassergekühlten Ring kurzgeschlossen. Die Schmelzhöhe beträgt 25 cm. Die Skullkühlfinger haben in 20 cm Höhe eine 90°-Abwinklung nach außen. Der Kragen hat einen Außendurchmesser von 50 cm. Auf dem Kragenrand sitzt ein Ring aus keramischen Silizumdioxid. Die Glasdichtung erfolgt über den Kontakt des Keramikringes mit der wassergekühlten Kragenplatte. Die Abdeckplatte ist ebenfalls aus Silziumdioxid. Die Beheizung des Oberofenraums erfolgt mittels eines Sauerstoffbrenners, der seitlich in den Oberofen hineinragt.

Die Spule hat einen Abstand von 2 cm zum Skulltiegel und 4 cm vom Kragen. Die Beheizung des Glases erfolgt mittels HF-Energie. Die HF-Frequenz liegt bei 1 MHz. Die HF-Leistung je nach Schmelztemperatur zwischen 100 und 300 kW.

Dieses Aggregat konnte sowohl als kontinuierlich arbeitender Läutertiegel als auch als diskontinuierliches Einschmelzaggregat über mehrere Monate eingesetzt werden, ohne daß irgendwelche Korrosionsprobleme zu beobachten waren.

Größere Volumina des Pilzskulls erfordern ein entsprechendes Up-Scale der HF-Leistung sowie eine Anpassung der HF-Frequenz. So wird für einen Pilztiegel mit 400 Liter Schmelzvolumen eine Frequenz von 100 kHz sowie HF-Leistungen von 1000 bis 2000 kW (je nach angestrebter Temperatur) benötigt. Eine Begrenzung des Schmelzvolumens wird im wesentlichen nur durch die maximal zugängliche HF-Leistung gesehen.

## Patentansprüche

1. Skulltiegel für das Erschmelzen oder das Läutern von Gläsern;
1.1 mit einer Tiegelwand (1);
1.2 mit einem Tiegelboden (3);
1.3 mit einer Induktionsspule (9), die die Tiegelwand (1) umgibt und über welche Hochfrequenzenergie in den Tiegelinhalt einkoppelbar ist;
1.4 die Tiegelwand ist aus einem Kranz von Metallrohren (1.1) gebildet, die an ein Kühlmedium anschließbar sind, mit Schlitzen zwischen einander benachbarten Metallrohren (1.1);
1.5 die Metallrohre (1.1) sind an ihren oberen Enden derart abgekröpft, daß sie sich - in Draufsicht auf die Tiegelwand (1) gesehen - nach außen erstrecken und einen Kragen (2) bilden;
1.6 der Kragen (2) ist von einer weiteren oberen Wand (4) umschlossen, deren Oberkante über der Ebene des Kragens (2) liegt, so daß die Schmelze während des Betriebes den Kragen (2) bedeckt.

2. Skulltiegel nach Anspruch 1, **dadurch gekennzeichnet, daß** der Oberofenraum (6) über der Schmelze abgedeckt ist.

3. Skulltiegel nach Anspruch 1 oder 2, **dadurch gekennzeichnet, daß** dem Oberofenraum (6) ein oder mehrere Brenner (8) zugeordnet sind.

4. Skulltiegel nach einem der Ansprüche 1 bis 3, **dadurch gekennzeichnet, daß** sich die Metallrohre (1.1) nach der Abkröpfung im Bereich des Kragens (2) zu hohlen Platten (2.2) erweitern, welche mittelbar oder unmittelbar Kühlmedium führen.

5. Skulltiegel nach einem der Ansprüche 1 bis 3, **dadurch gekennzeichnet, daß** die Metallrohre (1.1) im Bereich des Kragens (2) von hohlen Platten umgeben sind.

6. Skulltiegel nach Anspruch 4 oder 5, **gekennzeichnet durch** die folgenden Merkmale:
6.1 die Platten (2.1) sind - in Draufsicht - trapezförmig;
6.2 die Platten (2.1) sind derart gestaltet und angeordnet, daß zwischen zwei einander benachbarten Platten ein radial verlaufender Schlitz verbleibt.

7. Skulltiegel nach Anspruch 5, **dadurch gekennzeichnet, daß** die Schlitze eine konstante Weite aufweisen.

8. Skulltiegel nach einem der Ansprüche 1 bis 7, **dadurch gekennzeichnet, daß** die Oberwand (4) aus keramischem Material gebildet ist, und daß sich keine wassergekühlten metallischen Bauteile im Oberofenraum über der Schmelze befinden.

9. Skulltiegel nach einem der Ansprüche 1 bis 8, **dadurch gekennzeichnet, daß** der Tiegel von oben her befüllbar ist und am Boden einen Ablauf hat.

10. Skulltiegel nach einem der Ansprüche 1 bis 9, **dadurch gekennzeichnet, daß** der Skulltiegel im Boden einen Zulauf und im oberen Teil einen Ablauf besitzt.

11. Skulltiegel nach einem der Ansprüche 1 bis 10, **dadurch gekennzeichnet, daß** der Ablauf ein widerstandsbeheiztes Platinrohr ist.

12. Skulltiegel nach einem der Ansprüche 1 bis 11, **dadurch gekennzeichnet, daß** im
unteren Bodenbereich der Tegelwand (1) ein elektrischer Kurzschlußring (10)
vorgesehen ist.

13. Skulltiegel nach einem der Ansprüche 1 bis 12, **dadurch gekennzeichnet, daß** auch im
Bereich des oberen Randes der Tiegelwand (1) ein elektrischer Kurzschlußring (10a)
vorgesehen ist.

## Claims

1. Skull crucible for the melting or refining of glasses;
1.1 having a crucible wall (1);
1.2 having a crucible base (3);
1.3 having an induction coil (9) which surrounds the crucible wall (1) and via which high-frequency energy can be introduced into the contents of the crucible;
1.4 the crucible wall is formed from a ring of metal pipes (1.1) which can be connected to a cooling medium, with slots between mutually adjacent metal pipes (1.1);
1.5 the metal pipes (1.1) are angled off at their upper ends, in such a manner that - when the crucible wall (1) is considered in plan view - they extend outwards and form a collar (2);
1.6 the collar (2) is surrounded by a further, upper wall (4), the surface of which lies above the plane of the collar (2), so that the molten material covers the collar (2) during operation.

2. Skull crucible according to Claim 1, **characterized in that** the upper furnace space (6) above the melt is covered.

3. Skull crucible according to Claim 1 or 2, **characterized in that** the upper furnace space (6) is assigned one or more burners (8).

4. Skull crucible according to one of Claims 1 to 3, **characterized in that** the metal pipes (1.1), after they have been angled off in the region of the collar (2), widen to form hollow plates (2.2) which directly or indirectly guide cooling medium.

5. Skull crucible according to one of Claims 1 to 3, **characterized in that** the metal pipes (1.1) are surrounded by hollow plates in the region of the collar (2).

6. Skull crucible according to Claim 4 or 5, **characterized by** the following features:
6.1 the plates (2.1) are - in plan view - trapezium-shaped;
6.2 the plates (2.1) are designed and arranged in such a manner that a radially running slot remains between two adjacent plates.

7. Skull crucible according to Claim 5, **characterized in that** the slots have a constant width.

8. Skull crucible according to one of Claims 1 to 7, **characterized in that** the upper wall (4) is formed from ceramic material, and **in that** there are no water-cooled metallic components in the upper fumace space above the melt.

9. Skull crucible according to one of Claims 1 to 8, **characterized in that** the crucible can be filled from above and has an outlet at the base.

10. Skull crucible according to one of Claims 1 to 9, **characterized in that** the skull crucible has an inlet in the base and an outlet in the upper part.

11. Skull crucible according to one of Claims 1 to 10, **characterized in that** the outlet is a resistance-heated platinum tube.

12. Skull crucible according to one of Claims 1 to 11, **characterized in that** an electrical short-circuit ring (10) is provided in the lower base region of the crucible wall (1).

13. Skull crucible according to one of Claims 1 to 12, **characterized in that** an electrical short-circuit ring (10a) is also provided in the region of the upper edge of the crucible wall (1).

## Revendications

1. Creuset pour la fusion ou l'affinage de verres;
1.1 avec une paroi de creuset (1);
1.2 avec un fond de creuset (3);
1.3 avec une bobine d'induction (9) qui entoure la paroi de creuset (1) et par l'intermédiaire de laquelle de l'énergie à haute fréquence peut être injectée dans le contenu du creuset;
1.4 la paroi du creuset étant formée par une couronne de tubes métalliques (1.1) qui peuvent être raccordés à un fluide de refroidissement, avec des fentes entre les tubes métalliques (1.1) voisins les uns des autres;
1.5 les tubes métalliques (1.1) étant coudés à leur extrémité supérieure de manière à s'étendre vers l'extérieur lorsque la paroi (1) est vue en plan et à former un collet (2);
1.6 le collet (2) étant entouré par une autre paroi (4) supérieure dont le bord supérieur est situé sur le plan du collet (2) de telle sorte qu'en fonctionnement, le bain de fusion recouvre le collet (2).

2. Creuset selon la revendication 1, **caractérisé en ce que** l'espace supérieur (6) du four est fermé par un couvercle placé au-dessus du bain de fusion.

3. Creuset selon la revendication 1 ou 2, **caractérisé en ce qu'**un ou plusieurs brûleurs (8) sont associés à l'espace supérieur (6) du four.

4. Creuset selon l'un des revendications 1 à 3, **caractérisé en ce qu'**après le coude dans la région du collet (2), les tubes métalliques (1.1) s'évasent en plaques creuses (2.2) qui conduisent directement ou indirectement un fluide de refroidissement

5. Creuset selon l'une des revendications 1 à 3, **caractérisé en ce que** les tubes métalliques (1.1) sont entourés par des plaques creuses dans la région du collet (2).

6. Creuset selon la revendication 4 ou 5, **caractérisé par** les caractéristiques suivantes:
6.1 vues en plan, les plaques (2.1) sont en forme de trapèze ;
6.2 les plaques (2.1) sont configurées et disposées de telle sorte qu'entre deux plaques voisines l'une de l'autre reste une fente qui s'étend radialement.

7. Creuset selon la revendication 5, **caractérisé en ce que** les fentes présentent une largeur constante.

8. Creuset selon l'une des revendications 1 à 7, **caractérisé en ce que** la paroi supérieure (4) est formée d'un matériau céramique et **en ce qu'**aucun composant métallique refroidi par eau n'est situé dans l'espace supérieur du four au-dessus du bain de fusion.

9. Creuset selon l'une des revendications 1 à 8, **caractérisé en ce que** le creuset peut être rempli par le haut et présente une évacuation dans le fond.

10. Creuset selon l'une des revendications 1 à 9, **caractérisé en ce que** le creuset possède une amenée dans le fond et une évacuation dans sa partie supérieure.

11. Creuset selon l'une des revendications 1 à 10, **caractérisé en ce que** l'évacuation est un tube de platine chauffé par résistance.

12. Creuset selon l'une des revendications 1 à 11, **caractérisé en ce qu'**un anneau de court-circuit électrique (10) est prévu dans la zone inférieure du fond de la paroi (1) du creuset.

13. Creuset selon l'une des revendications 1 à 12, **caractérisé en ce qu'**un anneau de court-circuit électrique (10a) est également prévu dans la zone du bord supérieur de la paroi (1) du creuset.
